# EUROPEAN PATENT APPLICATION

(11) **EP 4 521 217 A1**
(43) Date of publication of application: **12.03.2025**
(21) Application number: 23830224.4
(22) Date of filing: 27.06.2023
(51) Int. Cl.: G06F 3/0481

(54) **DISPLAY METHOD AND APPARATUS FOR SESSION MESSAGE, AND DEVICE AND STORAGE MEDIUM**

(30) Priority: 29.06.2022 CN 202210761132
(71) Applicant: Beijing Zitiao Network Technology Co., Ltd., Beijing 100190 (CN)
(72) Inventor: JIN, Siyao, Beijing 100028 (CN); ZHU, Wennan, Beijing 100028 (CN)
(74) Representative: Dentons UK and Middle East LLP
(86) International application number: PCT/CN2023/102635
(87) International publication number: WO 2024/002047

(57) **Abstract**

Embodiments of the disclosure disclose a method, apparatus, device and storage medium for displaying a session message, and relate to the technical field of Internet. The method comprises: determining, in a group session interface, a target session message with message content containing media content; determining a media type corresponding to the media content and determining a target display mode for the target session message according to the media type, wherein the media type is determined based on at least one of a poster of the media content or a sender of the target session message; and displaying the target session message in the target display mode.

## Description

The disclosure claims the priority to the Chinese Patent Application No. 202210761132.0, filed with the Chinese Patent Office on June 29, 2022, which is incorporated in its entirety herein by reference.

### FIELD

Embodiments of the disclosure relate to the technical field of Internet, and relate to a method, apparatus, device and storage medium for displaying a session message, for instance.

### BACKGROUND

As the Internet technology grows rapidly, users communicate with each other more and more conveniently. A plurality of users can join a session in one group.

At present, it has become a prevailing recreational way to watch or browse online resource works such as livestream, videos, novels and comics, and the users can communicate with resource posters through groups established on corresponding platforms. However, with an increasing number of group members and session messages in the group, there is still room for improvement in efficiency of message interaction among the group members.

### SUMMARY

Embodiments of the disclosure provide a method, apparatus, device and storage medium for displaying a session message, which can optimize a solution for displaying a session message in the related art.

In a first aspect, an embodiment of the disclosure provides a method for displaying a session message. The method comprises:
determining, in a group session interface, a target session message of a target message type, where the target message type indicates a message type of message content containing media content, and the media content comprises at least one of a picture or a video;
determining a media type corresponding to the media content, and determining a target display mode for the target session message according to the media type, where the media type is determined based on at least one of a poster of the media content or a sender of the target session message; and
displaying the target session message in the target display mode.

In a second aspect, an embodiment of the disclosure further provides an apparatus for displaying a session message. The apparatus comprises:
a session message determination module configured to determine a target session message of a target message type in a group session interface, where the target message type indicates a message type of message content containing media content, and the media content comprises at least one of a picture or a video;
a target display mode determination module configured to determine a media type corresponding to the media content, and determine a target display mode for the target session message according to the media type, where the media type is determined based on at least one of a poster of the media content or a sender of the target session message; and
a session message displaying module configured to display the target session message in the target display mode.

In a third aspect, an embodiment of the disclosure further provides an electronic device. The electronic device comprises:
at least one processor; and
a storage apparatus configured to store at least one program.

When the at least one program is executed by the at least one processor, the at least one processor is caused to implement the method for displaying a session message according to the embodiment of the disclosure.

In a fourth aspect, an embodiment of the disclosure further provides a readable storage medium including a computer program. The computer program implements the method for displaying a session message according to the embodiment of the disclosure when being executed by a computer processor.

### BRIEF DESCRIPTION OF THE DRAWINGS

FIG. 1 is a schematic flow diagram of a method for displaying a session message according to an embodiment of the disclosure;
FIG. 2 is a schematic diagram of a display mode according to an embodiment of the disclosure;
FIG. 3 is a schematic diagram of another display mode according to an embodiment of the disclosure;
FIG. 4 is a schematic diagram of yet another display mode according to an embodiment of the disclosure;
FIG. 5 is a schematic flow diagram of a method for displaying a session message according to an embodiment of the disclosure;
FIG. 6 is a schematic diagram of interface interaction according to an embodiment of the disclosure;
FIG. 7 is a schematic structural diagram of an apparatus for displaying a session message according to an embodiment of the disclosure; and
FIG. 8 is a schematic structural diagram of an electronic device according to an embodiment of the disclosure.

### DETAILED DESCRIPTION OF EMBODIMENTS

The terms "comprise" and "comprise" used herein and their variations are open-ended, that is, "comprise but not limited to" and "comprise but not limited to". The term "based on" means "at least partly based on". The term "an embodiment" means "at least one embodiment". The term "another embodiment" means "at least another embodiment". The term "some embodiments" means "at least some embodiments". Related definitions of other terms will be given in the following description.

It should be noted that concepts such as "first" and "second" mentioned in the disclosure are only used to distinguish different apparatuses, modules or units, and are not used to limit an order or interdependence of functions executed by the apparatuses, modules or units.

It should be noted that modification with "a", "an" or "a plurality of' mentioned in the disclosure is illustrative rather than limitative, and should be understood by those skilled in the art as "one or more" unless explicitly stated otherwise in the context.

Names of messages or information exchanged between a plurality of apparatuses in the embodiment of the disclosure are only for illustrative purposes, instead of limiting the scope of the messages or information.

It can be understood that before usage of the technical solution disclosed in embodiments of the disclosure, a user has to be informed about a type, a use scope, a use scenario, etc. of personal information involved in the disclosure in an appropriate way in accordance with relevant laws and regulations and user authorization has to be obtained.

For instance, in response to receiving an active request of a user, prompt information is sent to the user, so as to clearly remind the user that an operation requested by the user is about to obtain and use personal information of the user. Therefore, the user can independently choose to provide or not provide the personal information to software or hardware such as an electronic device, an application, a server or a storage medium that executes an operation of the technical solution of the disclosure according to the prompt information.

As an optional and non-limitative embodiment, in response to receiving the active request of the user, a mode of sending the prompt information to the user can be, for instance, a pop-up window mode, in which the prompt information can be presented in a character form. In addition, the pop-up window can further carry a selection control allowing the user to choose to "agree" or "disagree" to provide the personal information to the electronic device.

It can be understood that the above process of informing and obtaining user authorization is only illustrative, and does not limit the embodiment of the disclosure. Other modes satisfying relevant laws and regulations can also be applied to the embodiment of the disclosure.

It can be understood that data involved in the technical solution (including, but not limited to, the data itself, and obtainment or usage of the data) has to comply with requirements of corresponding laws, regulations and relevant regulations.

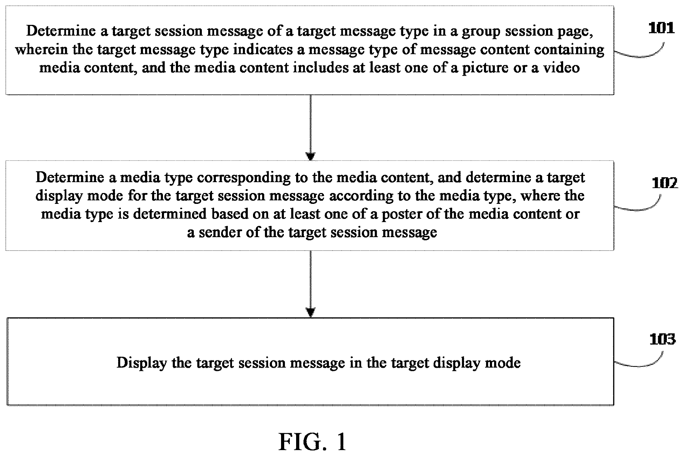

FIG. 1 is a schematic flow diagram of a method for displaying a session message according to an embodiment of the disclosure. The embodiment of the disclosure is suitable for a case of displaying a session message. The method may be executed by an apparatus for displaying a session message. The apparatus may be implemented through at least one of software and hardware, and optionally, may be implemented through an electronic device. The electronic device may be a mobile terminal such as a mobile phone, a smart watch, a tablet computer, and a personal digital assistant, or a device such as a personal computer (PC) end or a server.

As shown in FIG. 1, the method comprises the following steps:

Step 101, a target session message of a target message type in a group session interface is determined. The target message type indicates a message type of message content containing media content. The media content comprises at least one of a picture or a video.

In the embodiment of the disclosure, a group session may comprise at least two group members. That is, at least two users may serve as group members to conduct message interaction with each other in the group session. The group session is generally created by a group member denoted as a creator. The group session may also be provided with a group administrator denoted as an administrator, and the group administrator has operation authority to set or manage the group session. The creator and the administrator may be the same or different. At least one administrator may be present. For convenience of illustration, the creator and the administrator are collectively referred to as a group owner below.

For instance, the group session interface may be an interface in a preset application, and the preset application may be set to provide a group session function. A type of the preset application is not limited. For instance, the preset application may be a social application, a video application, a fivestreaming application, a shopping application, or an information application, or other types of applications. The group session interface may display a session message and related information of the session message (for instance, a user identifier of a group member who sends the session message, etc.). The user may conduct message interaction or other types of interaction based on the group session interface.

For instance, in the group session, a form of the session message is not limited, and for instance, may comprise a character, emoji, a picture, voice, a video or a control (for instance, a session card). For a current user, in the group session interface, a message sent by the current user is generally displayed on a first side (for instance, a right side) of the interface, and messages sent by a group member other than the current user (collectively referred to as an opposite group member) are displayed on a second side (for instance, a left side) of the interface. The messages of a plurality of opposite group members are mixed and arranged in an order of the sending time, such that the current user can hardly distinguish the different types of messages sent by opposite group members quickly. For the session message containing media content such as at least one of a picture or a video, the user generally needs to trigger to display details of the media content in a click-on manner during viewing, which causes high viewing cost. If a large number of these session messages are present in the group session interface, information screening efficiency of the user may be seriously affected. Therefore, in the embodiment of the disclosure, the session message with message content containing the media content is set as the session message of the target message type and is displayed in the determined display mode.

For instance, the target session message may be any session message, that is to be displayed or being displayed in the group session interface, of at least one target message type.

Step 102, a media type corresponding to the media content is determined, and a target display mode for the target session message is determined according to the media type. The media type is determined based on at least one of a poster of the media content or a sender of the target session message.

In the embodiment of the disclosure, different display modes may be set for different media types, and after the media type corresponding to the media content comprised in the target session message is determined, the corresponding target display mode may be determined for displaying the target session message. The media type corresponding to the media content may be determined based on the poster of the media content. For instance, different posters correspond to different media types, and accordingly, different posters correspond to different display modes. The media type corresponding to the media content may be determined based on the sender of the target session message. For instance, different senders correspond to different media types, and accordingly, different senders correspond to different display modes. The media type corresponding to the media content may also be determined by combining the poster of the media content and the sender of the target session message. For instance, the session message including the media content posted by the same poster may correspond to different media types due to different senders. Also, for instance, the session message sent by the same sender may correspond to different media types due to different posters of the contained media content.

There are different display modes, which are not limited and may be different in at least one of a display size, a display form, display copy-writing, and an amount of displayed information.

Step 103, the target session message is displayed in the target display mode.

For instance, after the target display mode is determined, the target session message may be displayed in the target display mode, which improves flexibility of session message display.

The method for displaying a session message according to the embodiment of the disclosure determines the target session message including the message content in the message content in the group session interface, determines the media type corresponding to the media content, determines the target display mode for the target session message according to the media type, wherein the media type is determined based on at least one of the poster of the media content or the sender of the target session message, and displays the target session message in the target display mode. With this technical solution, when the session message containing media content such as at least one of a picture or a video is displayed in the group session interface, a corresponding display mode may be determined according to at least one of the poster of the media content or the sender of the session message. As such, flexibility of displaying the session message can be improved, and members in a group can quickly distinguish a source of the media content in the message, which can improve information screening efficiency.

In some embodiments, the step that the media type corresponding to the media content is determined comprises the following steps: a target type corresponding to at least one of the poster of the media content or the sender of the target session message is determined; and the media type corresponding to the media content is determined based on the target type. The target type is determined based on whether a user has a preset association with a target user. The target user comprises at least one of the following: a creator of a group session, an administrator of the group session, or at least one user designated by the current user. Through the above arrangement, user types of at least one of the poster or the sender can be distinguished according to at least one of an association with a group owner and an association with the user designated by the current user, such that the target display mode can be determined more reasonably.

The preset association may be set according to actual needs. For instance, the preset association comprises at least one of the following associations: the poster or the sender is at least one of the creator or the administrator of the group session, the poster or the sender is at least one user designated by the current user, and the poster or the sender is a target group member designated by at least one of the creator or the administrator of the group session. In this way, media content sent or posted by the user having the above preset association is displayed differently from other media content in a group chat, such that information obtaining efficiency of the user can be improved. In addition, whether there is a preset association may also be determined through an interaction operation between users. For instance, if an interaction frequency of the users reaches a preset frequency threshold and a big-fan label is displayed on the user, it may be considered that the user has a preset association with the group owner.

In the embodiment of the disclosure, types corresponding to users may be divided into at least two types for instance, which are denotes as a first preset type and a second preset type respectively. Optionally, the steps that the media type corresponding to the media content is determined, and the target display mode for the target session message is determined according to the media type comprise at least one of the following steps: in a case where the poster of the media content and the sender of the target session message have no preset association with the target user of the group session, it is determined that a corresponding target type is a first preset type, and it is determined that the target display mode is a first preset display mode according to a media type corresponding to the first preset type; or in a case where the poster of the media content or the sender of the target session message has a preset association with the target user of the group session, it is determined that a corresponding target type is a second preset type, and it is determined that the target display mode is a second preset display mode according to a media type corresponding to the second preset type. The first preset display mode is different from the second preset display mode.

For convenience of illustration, a case that target types corresponding to group members are divided into the first preset type and the second preset type is taken as an instance. For the second preset type, the session message generally has a high correlation with chat content or a topic in which a user has interest. For the first preset type, the session message possibly comprises a message unrelated to chat content or a topic in which a user has interest. In this case, a large number of unrelated messages are likely present in the group session, which causes some interference to message obtaining efficiency of general group members. Therefore, the first preset type is corresponded to media content of a first media type, and the corresponding target display mode is determined as the first preset display mode. The second preset type is corresponded to media content of a second media type, and the corresponding target display mode is determined as the second preset display mode.

For instance, in one application scenario, in some embodiments, the preset application may have a resource posting function. A resource poster may post works, such as media works such as a picture work or a video work, in the preset application, for the view of other users. In order to facilitate communication between the resource poster and a user who follows the resource poster (which may be understood as a fan of the resource poster), a group may be created in the preset application, and group members may have a session in the group. A creator of the group may be the resource poster themselves, or the fan of the resource poster. In this case, the group may also be understood as a fan group. In a case of the second preset type, a user may send or forward a work of the resource poster in a form of the session message in the group session. In this case, the media content contained in the message content of the session message of the target message type may comprise work content. In a case of the first preset type, a user may possibly send a session message, such as a video, unrelated to the group owner, which may cause interference to message viewing of other fans. In addition, in the case of the first preset type, the user may also possibly post a session message related to the group owner. For instance, the media content contained in the session message is posted by the group owner. For instance, if a fan desires to discuss a work previously posted by the group owner with the other fans or the group owner in the group session, the fan may forward the work to the group session. In this case, the work of the group owner may still be displayed in the second display mode. In the embodiment of the disclosure, different display modes may be determined according to different cases.

In the embodiment of the disclosure, the session message of the target message type sent by the group member of the first preset type and the session message of the target message type sent by the group member of the second preset type may be displayed in different display modes. When the media content contained in the session message of the target message type is posted by the group member of the first preset type and when the media content contained in the session message of the target message type is sent by the group member of the second preset type, the media content may be displayed in different display modes. The first preset type corresponds to the first preset display mode, and the second preset type corresponds to the second preset display mode.

In some embodiments, the first preset display mode is different from the second preset display mode in at least one of a display size, a display form, a display of a character, or an amount of displayed information. With the above arrangement, the user may visually distinguish session messages from different sources quickly. When the first preset display mode is different from the second preset display mode in at least two of the above items, the user may distinguish more quickly and browse the messages more efficiently.

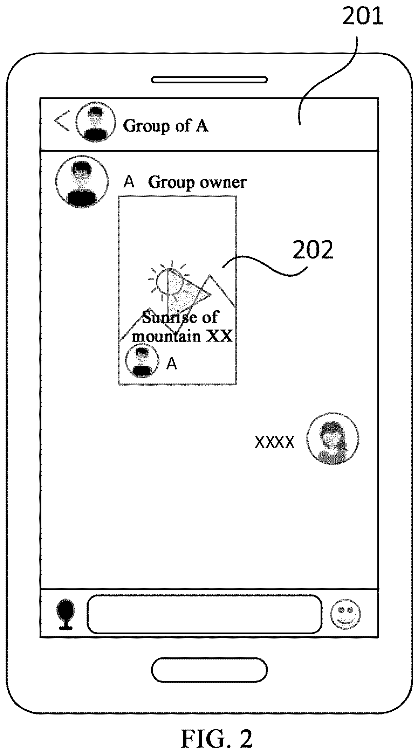

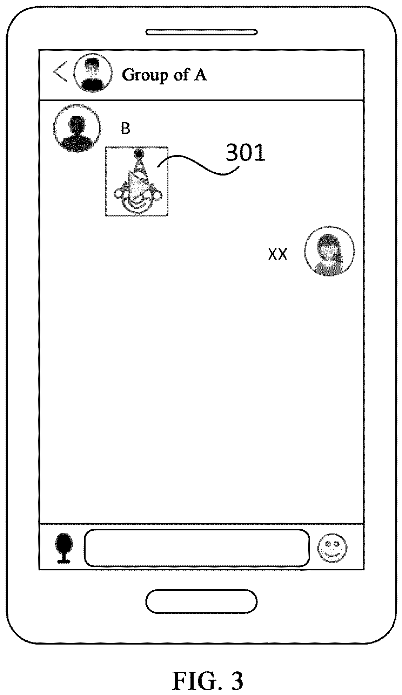

The display size may be understood as a size of an area occupied by displaying the target session message in the group session interface. Optionally, a display size corresponding to the first preset display mode is smaller than that corresponding to the second preset display mode. With the above arrangement, occupation of a interface space by the session message of the target message type corresponding to the group member of the first preset type can be effectively reduced, interference to the current user can be reduced, message viewing efficiency of the user can be improved, and obtaining efficiency of character information can be improved. FIG. 2 is a schematic diagram of a display mode according to an embodiment of the disclosure, which may correspond to a second preset display mode. As shown in FIG. 2, in a group session interface 201, a group owner A (a group member of a second preset type) sends a session message of a target message type and the message content of which is a landscape video. The session message 202 may be displayed in the second preset display mode (which may be denoted as a session card mode). FIG. 3 is a schematic diagram of another display mode according to an embodiment of the disclosure. As shown in FIG. 3, a group owner B (a group member of a first preset type) sends a session message of a target message type and the message content of which is a clown video. The session message 301 may be displayed in the first preset display mode. By comparing FIG. 2 with FIG. 3, it can be seen that the display size corresponding to the first preset display mode is smaller than that corresponding to the second preset display mode.

Display forms may comprise a display format and a display state. Optionally, a display form corresponding to the first preset display mode comprises displaying at least one of a thumbnail or a character associated with the media content. A display form corresponding to the second preset display mode comprises displaying an original image associated with the media content. A size of the thumbnail is smaller than that of the original image. The original image may comprise a picture in the message content, or comprise a video frame or a video cover of a video in the message content. The thumbnail may comprise a reduced image obtained by scaling down the original image, or a local image obtained by cropping the original image.

For instance, by comparing FIG. 2 with FIG. 3, it can be seen that in the second preset display mode, the session message 202 displays a video cover of the landscape video, and in the first preset display mode, the session message 301 displays a reduced image of a video frame of the clown video.

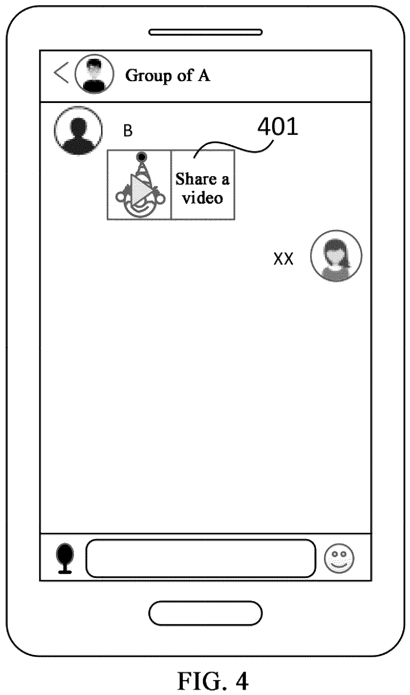

For instance, FIG. 4 is a schematic diagram of yet another display mode according to an embodiment of the disclosure. By comparing FIG. 2 with FIG. 4, it can be seen that the session message 202 in FIG. 2 displays a video cover of a landscape video in a form of a session card, and a session message 401 in FIG. 4 displays a thumbnail and characters "share a video" in a form of a session bubble. The session message 401 in FIG. 4 also displays a playing control and characters instead of the thumbnail. That is, a triangular playing control is kept at a thumbnail position, and display of a clown thumbnail is removed.

An amount of displayed information may be set to measure an amount of the displayed message content or an amount of associated information of the message content. Optionally, an amount of displayed information in the first preset display mode is smaller than that displayed in the second preset display mode. As shown in FIG. 2, in the second preset display mode, in a card control of the session message 202, a user identifier (an avatar and a name) of the group owner A is displayed, and a video topic "sunrise of mountain XX" is further displayed. However, neither the session message 301 in FIG. 3 nor the session message 401 in FIG. 4 displays the user identifier, the video topic, or other information.

It should be noted that the first preset display mode may be different from the second preset display mode in other aspects. For example, compared to the second preset display mode, in the first preset display mode a translucent layer is superimposed on the displayed session message. A user may quickly distinguish message sources according to presence or absence of the translucent layer.

For instance, if a target session message currently determined is a target session message to be displayed, whether a sender of the target session message has a preset association with a target user may be determined. If the sender of the target session message has no preset association with the target user, the target session message needs to be displayed in the first preset display mode. If the sender of the target session message has the preset association with the target user, the target session message needs to be displayed in the second preset display mode. For instance, the target session message sent by a group owner is displayed in the second preset display mode, and the target session message sent by a non-group owner is displayed in the first preset display mode. If the target session message being currently determined is a target session message that has been displayed, whether the sender of the target session message has a preset association with the target user may also be determined. If the sender of the target session message has no preset association with the target user, in a case where a current display mode is not the first preset display mode, the current display mode is switched to the first preset display mode for display. If the sender of the target session message has the preset association with the target user, the target session message is displayed still in the second preset display mode. For instance, if the target session message is sent by the group owner, switching is not performed, and if the target session message is sent by the non-group owner, switching is performed.

For instance, if a target session message currently determined is a target session message to be displayed, whether a poster of a media content in the target session message has a preset association with a target user may be determined. If the poster of the media content in the target session message has the preset association with the target user, the target session message needs to be displayed in the second preset display mode. If the poster of the media content in the target session message has no preset association with the target user, the target session message needs to be displayed in the first preset display mode. For instance, a session message of media content posted by a group owner is displayed in the second preset display mode, and a session message of media content posted by a non-group owner is displayed in the first preset display mode. If the target session message being currently determined is a target session message that has been displayed, whether the poster of the media content in the target session message has a preset association with the target user may also be determined. If the poster of the media content in the target session message has no preset association with the target user, in a case where a current display mode is not the first preset display mode, the display mode is switched to the first preset display mode for display If the poster of the media content in the target session message has the preset association with the target user, the target session message is displayed still in the second preset display mode. For instance, if the media content is posted by the group owner, switching is not performed, and if the media content is posted by the non-group owner, switching is performed.

For instance, the target display mode may be determined by combining the poster of the media content and the sender of the target session message. If the poster of the media content or the sender of the target session message has the preset association with the target user, the determined target display mode is the second preset display mode. If the poster of the media content and the sender of the target session message have no preset association with the target user, the determined target display mode is the first preset display mode.

In some embodiments, before the target session message of the target message type in the group session interface is determined, the method further comprises the following step: determining that a preset display function is in an enabled state. The preset display function is set as adopting, for a current user, respective display modes for the session message of the target message type based on different media types of the contained media content. With the above arrangement, a display mode of the session message of the target message type may be flexibly controlled by setting the preset display function. For example, a mode of using a unified preset display mode (which may be the second preset display mode) for displaying may be adopted. A mode of using different preset display modes for displaying may be adopted.

In some embodiments, before the preset display function is determined to be in the enabled state, the method further comprises the following step: the preset display function is enabled in response to an enabling operation of the current user for the preset display function. The current user may be the group owner, or another user other than the group owner.

For instance, a working state of the preset display function may be divided into an enabled state and a disabled state. The working state may be set independently by the current user, or at least one of a creator or an administrator of the group session. After the current user sets the working state independently, a setting result may take effect on the current user without affecting the working state of the preset display function of the group member other than the current user in the group session. The current user may comprise the group owner. For instance, user C sets a working state of an own preset display function as an enabled state, and a working state of a preset display function on a user D side is a disabled state before. A setting result of the user C does not affect the user D side. The working state of the preset display function on the user D side is still the disabled state. If the group owner sets the working state of the preset display function, the setting result may take effect on all the group members in the group session. That is, working states of preset display functions of all group members in a group are uniformly modified according to the setting result of the group owner.

In some embodiments, before the preset display function is determined to be in the enabled state, the method further comprises the following steps: a preset enabling control is displayed in an associated area of at least one session message of the target message type in the group session interface; and the preset display function is enabled in response to a triggering operation of the current user for the preset enabling control. With the above arrangement, the current user is allowed to freely and quickly set the working state of the preset display function by triggering the preset enabling control in a process of browsing the group session interface, such that setting efficiency can be improved.

For instance, the session message may be a session message of the target message type firstly displayed after the current user enters the group session interface, or a session message of a first target message type being currently displayed in the group session interface, or session messages, that are currently being displayed in the group session interface, of all target message types. The associated area may be a display area near a display area where the session message is located, such as a lower left area of the session message.

Optionally, a resident preset setting control may be displayed in a group session setting interface. The preset setting control is configured to modify and set the working state of the preset display function. After the current user triggers the preset enabling control, a preset viewing control may be displayed. After the current user triggers the preset viewing control, the group session setting interface may be jumped to, and the preset setting control may be displayed, such that the current user may adjust the working state of the preset display function.

In some embodiments, after the target session message is displayed in the first preset display mode, the method further comprises the following step: in response to a target interaction request, triggered by the current user in a first preset triggering mode, for the target session message, processing corresponding to the target interaction request is executed. The first preset triggering mode is different from a second preset triggering mode. The second preset triggering mode is a mode of triggering a target interaction request for a session message displayed in the second preset display mode. With the above arrangement, for session messages, displayed in different display modes, of the target message type, different preset triggering modes may be used to trigger interaction requests of the same type, which facilitates user operations.

For instance, the target interaction request may be, for instance, a detail viewing request, a like request, a comment request, a forward request, etc.

In some embodiments, the second preset triggering mode is different from the first preset triggering mode in types of gesture operations for triggering the target interaction request. For instance, with the like request as an instance, the first preset triggering mode may be a long-press operation, and the second preset triggering mode may be a double-tap operation.

In some embodiments, after the target session message is displayed in the first preset display mode, the method further comprises the following steps: in response to a citation operation of the current user for the target session message, reply content input by the current user is obtained; and a citation message is sent according to the reply content, and the citation message is displayed based on a third preset display mode. The third preset display mode is different from a fourth preset display mode. The fourth preset display mode is a display mode for a citation message of the target session message displayed in the second preset display mode. With the above arrangement, when the current user needs to cite the session message of the target message type, the citation message may be displayed in different display modes, such that message screening efficiency can be improved.

The third preset display mode corresponds to the first preset display mode, and the fourth preset display mode corresponds to the second preset display mode. For the fourth preset display mode, the session message cited may display an original image associated with a media content, a playing control, etc. For the third preset display mode, the session message cited may display a thumbnail associated with a media content, or display characters, such as "video sharing".

In some embodiments, the method may further comprise the following step: in response to a first search request of the current user for the session message of the target message type, a first search result and a second search result are displayed separately. The first search result comprises the session message, sent by a group member of the first preset type and matched with the first search request, of the target message type. The second search result comprises the session message, sent by a group member of the second preset type and matched with the first search request, of the target message type. With the above arrangement, for the session messages of the target message type sent by different types of group members, classified display of search results is conducted, such that the current user can quickly find a session message that the user desires to view from the corresponding search result, and search efficiency can be improved.

For instance, the search request may comprise a search keyword. Matching of the search request may be understood as the search keyword is hit in the message content in the session message. Optionally, the first search result and the second search result may be displayed in the same interface. For instance, the second search result is located in an upper part of a interface, and the first search result is located in a lower part of the interface. The first search result and the second search result may also be displayed in different interfaces. For instance, the first search result is displayed on a first result interface, and the second search result is displayed on a second result interface. The current user may switch between the first result interface and the second result interface by triggering a interface label.

In some embodiments, the method may further comprise the following step: in response to a second search request of the current user for the session message of the target message type sent by a group member of a target preset type, a target search result is displayed. The target search result comprises the session message, sent by the group member of the target preset type and matched with the second search request, of the target message type. Through the above arrangement, the current user may designate a search range during search, such that search matching efficiency can be improved, the search result can be quickly displayed, and further the user can find a desired message quickly.

For instance, in response to a search operation of the current user for the session message of the target message type, a search option is displayed. The search options comprise options corresponding to a first preset type and a second preset type, respectively. In response to a triggering operation of the current user for a target search option, the second search request is determined based on the target search option. For instance, a user inputs a search operation for searching a video message, and two search options of searching for a non-group owner and a group owner are displayed. When the user clicks on a group owner search option, the user searches for a matched video message sent by the group owner according to a search keyword of the second search request, and displays the video message as a target search result.

In some embodiments, the method comprises the following steps: in a case where the target session message does not satisfy a preset filtering condition, it is determined that the media type corresponding to the media content corresponds to the first preset display mode, and the target session message is displayed in the first preset display mode. With the above arrangement, display of the session message of the target message type can be more flexibly controlled.

In some embodiments, the method may further comprise the following step: in a case where the target session message satisfies the preset filtering condition, the target session message is displayed in the second preset display mode. With the above arrangement, the session message, satisfying the preset filtering condition and sent by the group member of the first preset type, of the target message type or the session message, satisfying the preset filtering condition and including the media content posted by the group member of the second preset type, of the target message type may be displayed in the second preset display mode, such that the user can view the corresponding message content in time and avoid missing important information.

In some embodiments, the preset filtering condition comprises at least one of the following conditions: at least one of the creator or the administrator of the group session has conducted a first preset interaction operation on the target session message; a cumulative number of group members who has viewed details of the target session message satisfies a first preset number requirement; and a cumulative number of group members who has conducted a second preset interaction operation on the target session message satisfies a second preset number requirement. With the above arrangement, the preset filtering condition is reasonably set, such that display of the session message of the target message type can be more reasonable.

For instance, the first preset interaction operation may comprise a like operation, a comment operation, a citation operation (which may also be understood as a reply operation), a forward operation, etc., and the second preset interaction operation may also comprise a like operation, a comment operation, a citation operation, a forward operation, etc. If the group owner has conducted the above interaction operation on the target session message, or a large number of group members in the group has conducted the above interaction operation on the target session message, it may be indicated that the current target session message may be interesting to the group owner or a large number of group members and has certain topicality. Thus, it does not need to be displayed in the first preset display mode.

For instance, if a large number of group members has viewed details of the target session message, it may be indicated that the target session message attracts a high degree of attention and does not need to be displayed in the first preset display mode. The details of the target session message may comprise details of the media content, such as a picture displayed in a preset size (for instance, a full-screen size) or a video played in a preset size. The preset size is larger than a display size of the target session message. The details of the target session message may be displayed in response to a viewing operation input by the user for the target session message. For instance, after the user clicks on the target session message including a video, the video may be played in full screen.

The preset number requirement may be that a corresponding number threshold is reached, or a ratio of a cumulative number to a total number of group members reaches a corresponding ratio threshold. Optionally, the first preset number requirement is higher than the second preset number requirement.

Optionally, the condition that the cumulative number of the group members who has viewed details of the target session message satisfies the first preset number requirement may be as follows: a cumulative number of group members who has completely viewed details of the target session message satisfies the first preset number requirement.

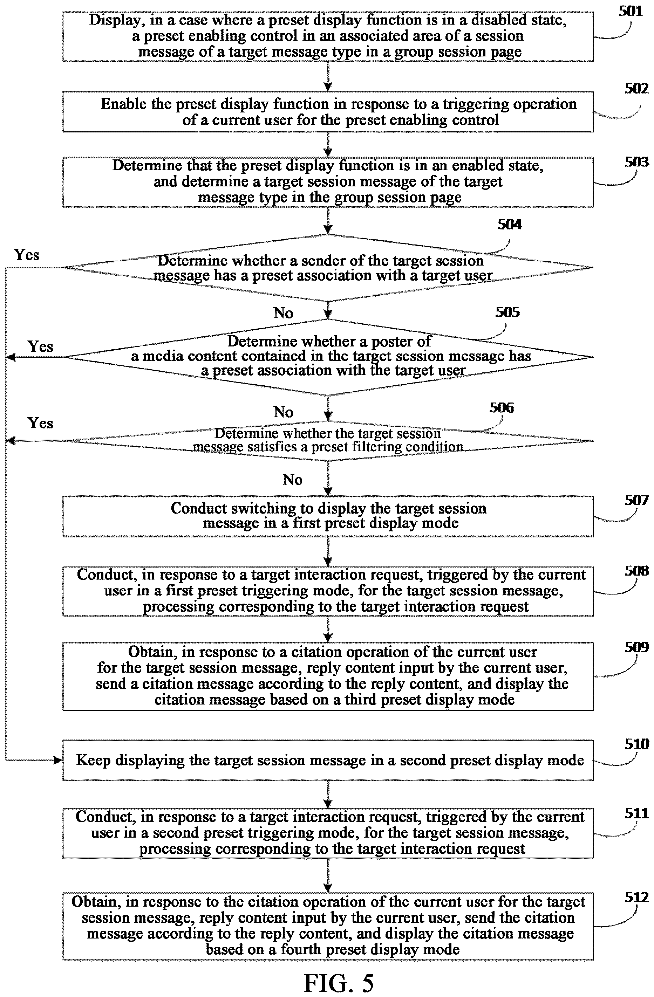

FIG. 5 is a schematic flow diagram of a method for displaying a session message according to an embodiment of the disclosure. The embodiment of the disclosure is optimized based on the optional solutions in the above embodiments. For instance, the method comprises the following steps:
Step 501, in a case where a preset display function is in a disabled state, a preset enabling control is displayed in an associated area of a session message of a target message type in a group session interface.

For instance, for convenience of illustration, group members in a group session are divided into two preset types. A group member of a first preset type is denoted as a non-group owner member, and a group member of a second preset type is denoted as a group owner. A first preset display mode corresponding to the first preset type is denoted as a softened display mode. A second preset display mode corresponding to the second preset type is denoted as a normal display mode. The message content of the session message of the target message type indicates a video, which is referred to as a video message for short. In a case that the preset display function is in the disabled state, the video message is displayed in the normal display mode. In a case that the preset display function is in the enabled state, if the video message sent by the non-group owner member and posted by the non-group owner member does not satisfy a preset filtering condition, the video message is displayed in a softened display mode; and if the video message satisfies the preset filtering condition, the video message is displayed in the normal display mode. In addition, the video message sent by the group owner, and the video message sent by the group members and containing a video sent by the group owner are displayed in the normal display mode.

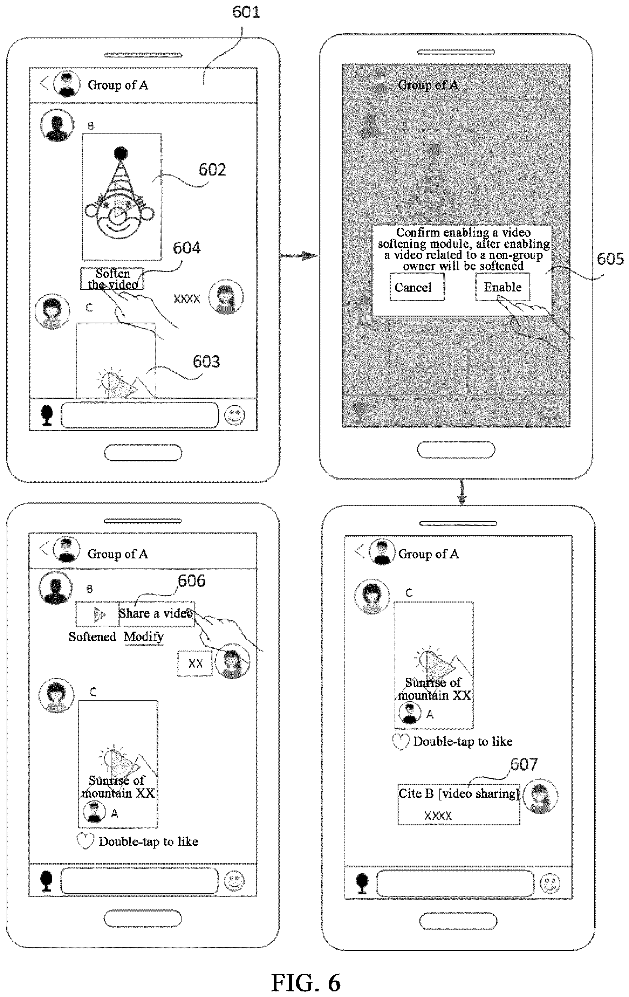

FIG. 6 is a schematic diagram of interface interaction according to an embodiment of the disclosure. As shown in FIG. 6, a current preset display function is in a disabled state, and a group session interface 601 displays two video messages, which are a first session message 602 sent by user B and a second session message 603 sent by user C (not completely shown in the figure). Both the user B and the user C are non-group owner members. In an area below the first session message 602, a preset enabling control 604 is displayed. The media content in the first session message 602 is sent by the non-group owner member, and the media content in the second session message 603 is sent by the group owner member.

Step 502, the preset display function is enabled in response to a triggering operation of the current user for the preset enabling control.

Optionally, the preset display function is enabled in response to the triggering operation of the current user for the preset enabling control, such that the current user can determine whether to enable the preset display function, and the preset display function is enabled in response to a confirmation operation of the current user.

As shown in FIG. 6, if the current user desires to enable the preset display function, the preset enabling control 604 may be clicked on, and then prompt information 605 may be displayed. After the current user clicks an enabling button, the preset display function is enabled in response to receiving the confirmation operation of the user.

Step 503, it is determined that the preset display function is in an enabled state, and a target session message of the target message type in the group session interface is determined.

For instance, after it is determined that the preset display function is in the enabled state, target session messages to be processed are determined as the first session message 602 and the second session message 603.

Step 504, whether a sender of the target session message has a preset association with a target user is determined. If the sender of the target session message has no preset association with the target user, step 505 is executed. If the sender of the target session message has the preset association with the target user, step 510 is executed.

For instance, for the first session message 602, if the user B is a non-group owner member, step 505 is executed. For the second session message 603, if the user C is a non-group owner member, step 505 is executed. If the to-be-processed target session message comprises a message sent by a group owner, step 510 may be executed.

Step 505, whether a poster of the media content comprised in the target session message has a preset association with the target user is determined. If the poster of the media content comprised in the target session message has the preset association with the target user, step 510 is executed. If the poster of the media content comprised in the target session message has no preset association with the target user, step 506 is executed.

For instance, if media content of the first session message 602 is posted by the non-group owner member, step 506 is executed. If media content of the second session message 603 is posted by the group owner member, step 510 is executed.

Step 506, whether the target session message satisfies a preset filtering condition is determined. If the target session message satisfies the preset filtering condition, step 510 is executed. If the target session message does not satisfy the preset filtering condition, step 507 is executed.

For instance, it is assumed that the preset filtering condition is that at least one of the creator or the administrator of the group session has conducted a first preset interaction operation on the target session message. For the first session message 602, if the group owner does not conduct the first preset interaction operation, step 507 is executed.

Step 507, switching is conducted to display the target session message in the first preset display mode.

For instance, for the first session message 602, the display mode needs to be changed. A first session message 606 displayed in the first preset display mode is presented as a session bubble, and the bubble comprises a playing control and a character explanation "share a video". In addition, in order to enable the user to conveniently adjust a working state of the preset display function, a preset viewing control may be displayed at the session message displayed in the first preset display mode, such as "Modify" in FIG. 6. After the user triggers the preset viewing control, a group session setting interface may be jumped to, and a displayed preset setting control may be used to adjust the working state of the preset display function.

Step 508, in response to a target interaction request, triggered by the current user in a first preset triggering mode, for the target session message, processing corresponding to the target interaction request is conducted.

For instance, the target interaction request may comprise a like request. For a video message normally displayed, the second preset triggering mode may be a double-tap on the video message, and is different from the first preset triggering mode that may be a long-press on the video message for instance.

Step 509, in response to a citation operation of the current user for the target session message, reply content input by the current user is obtained, a citation message is sent according to the reply content, and the citation message is displayed based on a third preset display mode.

As shown in FIG. 6, if the current user desires to cite the first session message 606 after viewing the first session message 606, the current user may obtain the reply content for the citation input by the current user, the citation message may be generated and sent, and a citation message 607 may be displayed in the third preset display mode in the group session interface. The third preset display mode may be, for instance, to display citation explanatory characters "cite ... [video sharing]" and a name of a sender of the cited message in a form of a session bubble, such as a name "B" of the user B in FIG. 6.

Step 510, the target session message is displayed still in the second preset display mode.

For instance, for the second session message 603, the content is a video posted by the group owner, so the content may be displayed in the normal display mode.

Step 511, in response to a target interaction request, triggered by the current user in a second preset triggering mode, for the target session message, processing corresponding to the target interaction request is conducted.

For instance, if the current user desires to initiate a like request for the second session message 603, the current user may double-tap on the second session message 603.

Step 512, in response to the citation operation of the current user for the target session message, the reply content input by the current user is obtained, the citation message is sent according to the reply content, and the citation message is displayed based on a fourth preset display mode.

For instance, if the current user desires to cite the second session message 603 after viewing the second session message 603, the current user may obtain the reply content for the citation input by the current user, the citation message may be generated and sent, and a citation message may be displayed in the fourth preset display mode in the group session interface. The fourth preset display mode may be, for instance, to display a citation explanatory character "cite", a video cover of a video comprised in the second session message, a playing control, etc., in a form of a session card.

In the method for displaying a session message according to the embodiment of the disclosure, the preset enabling control is displayed in the associated area of the session message of the target message type in the group session interface, and the user may conveniently set the working state of the preset display function through the preset enabling control. When the working state is set as the enabled state, the session message may be displayed in different modes according to whether the sender of the session message is the group owner and whether content of the session message is posted by the group owner, and a non-group owner video sent by the non-group owner may be softened. In this way, a video card is compressed into a picture or characters, such that an interface space can be greatly saved, message display efficiency can be improved, the members in the group can quickly distinguish the message source, and information screening efficiency can be improved. Moreover, different interaction initiation modes and citation message display modes are provided for different display modes, such that user experience can be enhanced.

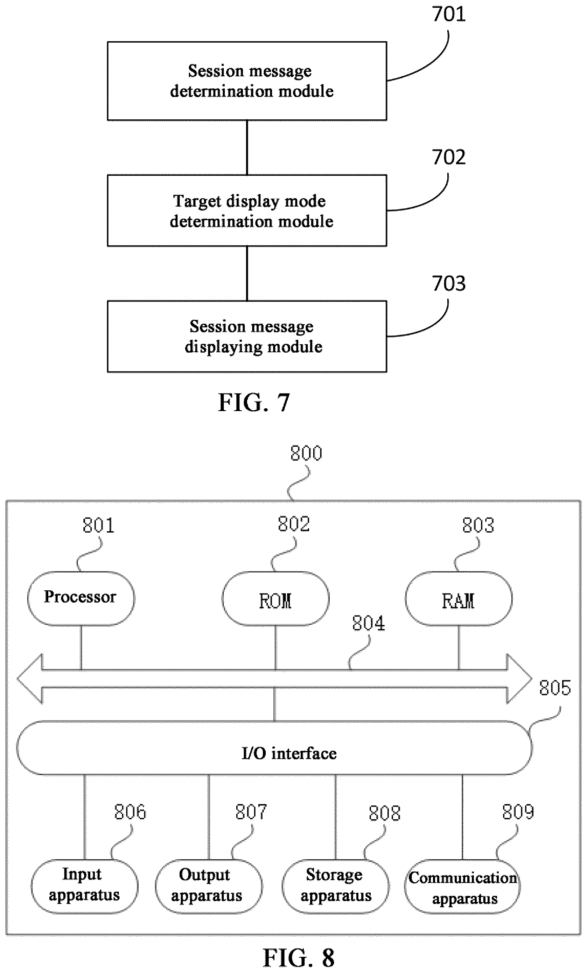

FIG. 7 is a schematic structural diagram of an apparatus for displaying a session message according to an embodiment of the disclosure. As shown in FIG. 7, the apparatus comprises:
a session message determination module 701 configured to determine a target session message of a target message type in a group session interface, where the target message type indicates a message type of message content containing media content, and the media content comprises at least one of a picture or a video;
a target display mode determination module 702 configured to determine a media type corresponding to the media content, and determine a target display mode for the target session message according to the media type, where the media type is determined based on at least one of a poster of the media content or a sender of the target session message; and
a session message displaying module 703 configured to display the target session message in the target display mode.

The apparatus for displaying a session message according to the embodiment of the disclosure determines the target session message including the message content in the message content in the group session interface, determines the media type corresponding to the media content, determines the target display mode for the target session message according to the media type, where the media type is determined based on at least one of the poster of the media content or the sender of the target session message, and displays the target session message in the target display mode. With the technical solution, when the session message including at least one media content such as a picture and a video is displayed in the group session interface, a corresponding display mode may be determined according to at least one of the poster of the media content or the sender of the session message, such that flexibility of displaying the session message can be improved, and members in a group can quickly distinguish the media content sources in the message, which can improve information screening efficiency.

Optionally, the step that the media type corresponding to the media content is determined comprises the following steps:
a target type corresponding to at least one of the poster of the media content or the sender of the target session message is determined; and
the media type corresponding to the media content is determined based on the target type.

The target type is determined based on whether a user has a preset association with a target user. The target user comprises at least one of the following: a creator of a group session, an administrator of the group session, or at least one user designated by a current user.

Optionally, the target display mode determination module is configured to conduct at least one of the following steps:
in a case where the poster of the media content and the sender of the target session message have no preset association with the target user of the group session, it is determined that a corresponding target type is a first preset type; and it is determined that the target display mode is a first preset display mode according to a media type corresponding to the first preset type; or
in a case where the poster of the media content or the sender of the target session message has a preset association with the target user of the group session, it is determined that a corresponding target type is determined as a second preset type; and it is determined that the target display mode is a second preset display mode according to a media type corresponding to the second preset type.

The first preset display mode is different from the second preset display mode.

Optionally, the first preset display mode is different from the second preset display mode in at least one of a display size, a display form, a display of a character, or an amount of displayed information.

Optionally, at least one of the following conditions is satisfied: a display size corresponding to the first preset display mode is smaller than that corresponding to the second preset display mode; or an amount of displayed information in the first preset display mode is smaller than that displayed in the second preset display mode.

Optionally, a display form corresponding to the first preset display mode comprises displaying at least one of a thumbnail or a character associated with the media content. A display form corresponding to the second preset display mode comprises displaying an original image associated with the media content. A size of the thumbnail is smaller than that of the original image.

Optionally, the apparatus further comprises:
a working state determination module configured to determine, before the target session message of the target message type in the group session interface is determined, a preset display function to be in an enabled state. The preset display function is set as adopting, for a current user, respective display modes for the session message of the target message type based on different media types of the contained media content.

Optionally, the apparatus further comprises:
an enabling module configured to enable, before the preset display function is determined to be in the enabled state, the preset display function in response to an enabling operation of the current user for the preset display function.

Optionally, the enabling module comprises:
a control displaying unit configured to display a preset enabling control in an associated area of at least one session message of the target message type in the group session interface; and
an enabling unit configured to enable the preset display function in response to a triggering operation of the current user for the preset enabling control.

Optionally, at least one of the enabled state and a disabled state of the preset display function is set by at least one of a creator or an administrator of a group session.

Optionally, the apparatus further comprises:
an interaction processing module configured to execute, in response to a target interaction request, triggered by the current user in a first preset triggering mode, for the target session message, processing corresponding to the target interaction request after the target session message is displayed in the first preset display mode. The first preset triggering mode is different from a second preset triggering mode. The second preset triggering mode is a mode of triggering a target interaction request of a session message displayed in the second preset display mode.

Optionally, the second preset triggering mode is different from the first preset triggering mode in types of gesture operations for triggering the target interaction request.

Optionally, the apparatus further comprises:
reply content obtaining module configured to obtain, in response to a citation operation of the current user for the target session message, a reply content input by the current user after the target session message is displayed in the first preset display mode; and
a citation message displaying module configured to send a citation message according to the reply content, and display the citation message based on a third preset display mode, where the third preset display mode is different from a fourth preset display mode, and the fourth preset display mode is a display mode for a citation message of the target session message displayed in the second preset display mode.

Optionally, the apparatus comprises:
a displaying module configured to determine, in a case where the target session message does not satisfy a preset filtering condition, that the media type corresponding to the media content corresponds to the first preset display mode, and display the target session message in the first preset display mode.

Optionally, the preset filtering condition comprises at least one of the following conditions:
at least one of the creator or the administrator of the group session has conducted a first preset interaction operation on the target session message;
a cumulative number of group members who has viewed details of the target session message satisfies a first preset number requirement; or
a cumulative number of group members who has conducted a second preset interaction operation on the target session message satisfies a second preset number requirement.

Optionally, the apparatus further comprises a search module configured to:
display, in response to a first search request of the current user for the session message of the target message type, a first search result and a second search result separately, where the first search result comprises the session message, sent by a group member of the first preset type and matched with the first search request, of the target message type, and the second search result comprises the session message, sent by a group member of the second preset type and matched with the first search request, of the target message type; and alternatively,
display, in response to a second search request of the current user for the session message of the target message type sent by a group member of a target preset type, a target search result, where the target search result comprises the session message sent by the group member of the target preset type and matched with the second search request.

Optionally, the preset association comprises at least one of the following associations: the user is at least one of the creator or the administrator of the group session, the user is the at least one user designated by the current user, or the user is a target group member designated by at least one of the creator or the administrator of the group session.

The apparatus for displaying a session message according to the embodiment of the disclosure may execute the method for displaying a session message according to any one of the embodiments of the disclosure, and has corresponding functional modules and effects corresponding to execution of the method.

It should be noted that units and modules comprised in the apparatus are merely divided according to a functional logic, but are not limited to the above division, as long as the corresponding functions may be achieved. In addition, names of functional units are merely for convenience of mutual distinguishing, and are not used to limit the protection scope of the embodiments of the disclosure.

FIG. 8 is a schematic structural diagram of an electronic device according to an embodiment of the disclosure. With reference to FIG. 8, FIG. 8 shows a schematic structural diagram of an electronic device (for instance, a terminal device or a server in FIG. 8) 800 suitable for implementing an embodiment of the disclosure below. The terminal device in the embodiment of the disclosure may be, but is not limited to, a mobile terminal such as a mobile phone, a notebook computer, a digital broadcast receiver, a personal digital assistant (PDA), a portable android device (PAD), a portable media player (PMP), or a vehicle-mounted terminal (for instance, a vehicle-mounted navigation terminal), and a fixed terminal such as a digital television (TV) or a desktop computer. The electronic device shown in FIG. 8 is only illustrative, and is not intended to limit functions and a use scope of the embodiments of the disclosure.

As shown in FIG. 8, the electronic device 800 may comprise a processor (for instance, a central processing unit or a graphics processing unit) 801. The processor 801 may execute various appropriate actions and processing according to a program stored in a read-only memory (ROM) 802 or a program loaded from a storage apparatus 808 to a random access memory (RAM) 803. The RAM 803 further stores various programs and data required for operations of the electronic device 800. The processor 801, the ROM 802 and the RAM 803 are connected to one another by means of a bus 804. An input/output (I/O) interface 805 is further connected to the bus 804.

Generally, the following apparatuses may be connected to the I/O interface 805: an input apparatus 806 including, for instance, a touch screen, a touch pad, a keyboard, a mouse, a camera, a microphone, an accelerometer, a gyroscope, etc.; an output apparatus 807 including, for instance, a liquid crystal display (LCD), a speaker, a vibrator, etc.; the storage apparatus 808 including, for instance, a magnetic tape, a hard disk, etc.; and a communication apparatus 809. The communication apparatus 809 may allow the electronic device 800 to be in wireless or wired communication with other devices so as to achieve data exchange. Although FIG. 8 shows the electronic device 800 including various apparatuses, it should be understood that not all the apparatuses shown are required to be implemented or comprised. More or fewer apparatuses may be alternatively implemented or comprised.

Particularly, according to the embodiment of the disclosure, the process described above with reference to the flow diagram may be implemented to be a computer software program. For instance, an embodiment of the disclosure comprises a computer program product, which comprises a computer program hosted by a non-transitory computer-readable medium. The computer program comprises a program code configured to execute the method shown in the flow diagram. In such an embodiment, the computer program may be downloaded and installed from a network through the communication apparatus 809, or installed from the storage apparatus 808, or installed from the ROM 802. The computer program executes the functions defined in the method according to the embodiment of the disclosure when being executed by the processor 801.

The electronic device according to the embodiment of the disclosure belongs to the same concept as the method for displaying a session message according to the above embodiments. Reference may be made to the above embodiments for technical details not described in detail in the embodiment. The embodiment has the same effects as the above embodiments.

An embodiment of the disclosure provides a computer-readable storage medium, which stores a computer program. The computer program implements the method for displaying a session message according to the embodiment when being executed by a processor.

It should be noted that the computer-readable storage medium described in the disclosure may be a computer-readable signal medium, or a computer-readable storage medium, or any combination thereof. For instance, the computer-readable storage medium may be, but is not limited to, an electronic, magnetic, optical, electromagnetic, infrared, or semiconductor system, apparatus, or device, or any suitable combination thereof. Instances of the computer-readable storage medium may comprise, but are not limited to, an electrical connection having at least one wire, a portable computer disk, a hard disk, a random access memory (RAM), a read-only memory (ROM), an erasable programmable read-only memory (EPROM), a flash memory, an optical fiber, a portable compact disc read-only memory (CD-ROM), an optical storage device, a magnetic storage device, or any suitable combination thereof. In the disclosure, the computer-readable storage medium may be any tangible medium including or storing a program. The program may be used by or in combination with an instruction execution system, apparatus or device. In the disclosure, the computer-readable signal medium may comprise a data signal in a baseband or as part of a carrier for transmission, and the data signal carries a computer-readable program code. The sent data signal may be in various forms, and may be, but is not limited to, an electromagnetic signal, an optical signal, or any suitable combination thereof. The computer-readable signal medium may further be any computer-readable storage medium other than the computer-readable storage medium. The computer-readable signal medium may transmit, propagate or transmit a program used by or in combination with an instruction execution system, apparatus or device. The program code comprised in the computer-readable storage medium may be sent by any suitable medium, including but not limited to an electric wire, an optical cable, radio frequency (RF), etc., or any suitable combination thereof.

In some embodiments, a client and a server may be in communication with each other with any currently known or future-developed network protocol, for instance, a hypertext transfer protocol (HTTP), and may be interconnected with digital data communication (for instance, a communication network) in any form or medium. Instances of the communication network comprise a local area network (LAN), a wide area network (WAN), the internet work (for instance, the Internet), an end-to-end network (for instance, an ad hoc end-to-end network), and any currently-known or future-developed networks.

The computer-readable storage medium may be comprised in the electronic device, or may exist independently without being assembled into the electronic device.

The computer-readable storage medium carries at least one program. When the at least one program is executed by the electronic device, the electronic device is caused to: determine a target session message of a target message type in a group session interface, where the target message type indicates a message type of message content containing media content, and the media content comprises at least one of a picture or a video; determine a media type corresponding to the media content, and determine a target display mode for the target session message according to the media type, where the media type is determined based on at least one of a poster of the media content or a sender of the target session message; and display the target session message in the target display mode.

A computer program code configured to execute an operation of the disclosure may be written in at least one programming language or a combination thereof. The programming languages comprise, but are not limited to, object-oriented programming languages such as Java, Smalltalk, and C++, and further comprise conventional procedural programming languages such as "C" or similar programming languages. The program code may be executed entirely on a user computer, executed partially on a user computer, executed as a stand-alone software package, executed partially on a user computer and partially on a remote computer, or executed entirely on the remote computer or a server. In the case involving the remote computer, the remote computer may be connected to the user computer through any type of networks including the local area network (LAN) or the wide area network (WAN), or may be connected to an external computer (for instance, the remote computer is connected through the Internet by an Internet service provider).

The flow diagrams and block diagrams in the accompanying drawings illustrate system structures, functions and operations, which may be implemented according to systems, methods and computer program products in all the embodiments of the disclosure. In view of that, each block in flow diagrams or block diagrams may represent a module, a program segment, or part of a code, which comprises at least one executable instruction configured to implement specified logic functions. It should further be noted that in some alternative implementations, the functions noted in the blocks may also occur in an order different from that in the accompanying drawings. For instance, the functions represented by two continuous blocks may be actually implemented basically in parallel, or may be implemented in reverse orders, which depends on the involved functions. It should further be noted that each block in the block diagrams and flow diagrams and combinations of the blocks in the block diagrams and the flow diagrams may be implemented with dedicated hardware-based systems that implement the specified functions or operations, or may be implemented with combinations of dedicated hardware and computer instructions.

The units involved in the embodiments described in the disclosure may be implemented by software or hardware. A name of the module does not limit the module itself. For instance, the session message displaying module may be further described as "a module for displaying the target session message in the target display mode".

The functions described herein may be at least partially executed by at least one hardware logic component. For instance, for the non-limitative purposes, illustrative types of hardware logic components that may be used comprise: a field programmable gate array (FPGA), an application specific integrated circuit (ASIC), application specific standard parts (ASSPs), a system on chip (SOC), a complex programmable logic device (CPLD), etc.

In the context of the disclosure, the machine-readable storage medium may be a tangible medium, which may comprise or store a program used by or used in combination with an instruction execution system, apparatus or device. The machine-readable storage medium may be a machine-readable signal medium or a machine-readable storage medium. The machine-readable storage medium may comprise, but is not limited to, an electronic, magnetic, optical, electromagnetic, infrared, or semiconductor system, apparatus, or device, or any suitable combination thereof. Instances of the machine-readable storage medium comprise an electrical connection based on at least one wire, a portable computer disk, a hard disk, a random access memory (RAM), a read-only memory (ROM), an erasable programmable read-only memory (EPROM), a flash memory, an optical fiber, a portable compact disc read-only memory (CD-ROM), an optical storage device, a magnetic storage device, or any suitable combination thereof.

According to one or more embodiments of the disclosure, instance 1 provides a method for displaying a session message. The method comprises the following steps:
a target session message of a target message type in a group session interface is determined, wherein the target message type indicates a message type of message content containing media content, and the media content comprises at least one of a picture or a video;
a media type corresponding to the media content is determined, and a target display mode for the target session message is determined according to the media type, where the media type is determined based on at least one of a poster of the media content or a sender of the target session message; and
the target session message is displayed in the target display mode.

According to one or more embodiments of the disclosure, the step that the media type corresponding to the media content is determined in instance 2 according to the method of the instance 1 comprises the following steps:
a target type corresponding to at least one of the poster of the media content or the sender of the target session message is determined; and
the media type corresponding to the media content is determined based on the target type.

The target type is determined based on whether a user has a preset association with a target user. The target user comprises at least one of the following: a creator of a group session, an administrator of the group session, or at least one user designated by a current user.

According to one or more embodiments of the disclosure, the steps that the media type corresponding to the media content is determined, and the target display mode for the target session message is determined according to the media type in instance 3 according to the method of the instance 2 comprise at least one of the following steps:
in a case where the poster of the media content and the sender of the target session message have no preset association with the target user of the group session, it is determined that a corresponding target type is a first preset type; and it is determined that the target display mode is a first preset display mode according to a media type corresponding to the first preset type; or
in a case where the poster of the media content or the sender of the target session message has a preset association with the target user of the group session, it is determined that a corresponding target type is a second preset type; and it is determined that the target display mode is a second preset display mode according to a media type corresponding to the second preset type.

The first preset display mode is different from the second preset display mode.

According to one or more embodiments of the disclosure, in instance 4 according to the method of the instance 3, the first preset display mode is different from the second preset display mode in at least one of a display size, a display form, a display of a character, or an amount of displayed information.

According to one or more embodiments of the disclosure, instance 5 according to the method of the instance 4 satisfies at least one of the following conditions: a display size corresponding to the first preset display mode is smaller than that corresponding to the second preset display mode; or an amount of displayed information by the first preset display mode is smaller than that displayed by the second preset display mode.

According to one or more embodiments of the disclosure, in instance 6 according to the method of the instance 4, a display form corresponding to the first preset display mode comprises displaying at least one of a thumbnail or a character associated with the media content. A display form corresponding to the second preset display mode comprises displaying an original image associated with the media content. A size of the thumbnail is smaller than that of the original image.

According to one or more embodiments of the disclosure, before the target session message of the target message type in the group session interface is determined, instance 7 according to the method of the instance 1 further comprises the following step: a preset display function is determined to be in an enabled state. The preset display function is set as adopting, for a current user, respective display modes for the session message of the target message type based on different media types of the contained media content.

According to one or more embodiments of the disclosure, before the preset display function is determined to be in the enabled state, instance 8 according to the method of the instance 7 further comprises the following step:
the preset display function is enabled in response to an enabling operation of the current user for the preset display function.

According to one or more embodiments of the disclosure, in instance 9 according to the method of the instance 8, the step that the preset display function is enabled in response to the enabling operation of the current user for the preset display function comprises the following steps:
a preset enabling control is displayed in an associated area of at least one session message of the target message type in the group session interface; and
the preset display function is enabled in response to a triggering operation of the current user for the preset enabling control.

According to one or more embodiments of the disclosure, in instance 10 according to the method of the instance 7, at least one of the enabled state and a disabled state of the preset display function is set by at least one of a creator or an administrator of a group session.

According to one or more embodiments of the disclosure, after the target session message is displayed in the first preset display mode, instance 11 according to the method of the instance 3 further comprises the following step:
in response to a target interaction request, triggered by the current user in a first preset triggering mode, for the target session message, processing corresponding to the target interaction request is executed. The first preset triggering mode is different from a second preset triggering mode. The second preset triggering mode is a mode of triggering a target interaction request for a session message displayed in the second preset display mode.

According to one or more embodiments of the disclosure, in instance 12 according to the method of the instance 11, the second preset triggering mode is different from the first preset triggering mode in types of gesture operations for triggering the target interaction request.

According to one or more embodiments of the disclosure, after the target session message is displayed in the first preset display mode, instance 13 according to the method of the instance 3 further comprises the following steps:
in response to a citation operation of the current user for the target session message, a reply content input by the current user is obtained; and
a citation message is sent according to the reply content, and the citation message is displayed based on a third preset display mode. The third preset display mode is different from a fourth preset display mode. The fourth preset display mode is a display mode for a citation message of the target session message displayed in the second preset display mode.

According to one or more embodiments of the disclosure, in instance 14 according to the method of the instance 3, the method comprises the following steps:
in a case where the target session message does not satisfy a preset filtering condition, it is determined that the media type corresponding to the media content corresponds to the first preset display mode, and the target session message is displayed in the first preset display mode.

According to one or more embodiments of the disclosure, in instance 15 according to the method of the instance 14, the preset filtering condition comprises at least one of the following conditions:
at least one of the creator and the administrator of the group session has conducted a first preset interaction operation on the target session message;
a cumulative number of group members who has viewed details of the target session message satisfies a first preset number requirement; or
a cumulative number of group members who has conducted a second preset interaction operation on the target session message satisfies a second preset number requirement.

According to one or more embodiments of the disclosure, instance 16 according to the method of the instance 3 further comprises the following step:
in response to a first search request of the current user for the session message of the target message type, a first search result and a second search result are displayed separately, where the first search result comprises the session message, sent by a group member of the first preset type and matched with the first search request, of the target message type, and the second search result comprises the session message, sent by a group member of the second preset type and matched with the first search request, of the target message type; and alternatively,
in response to a second search request of the current user for the session message of the target message type sent by a group member of a target preset type, a target search result is displayed, where the target search result comprises the session message sent by the group member of the target preset type and matched with the second search request.

According to one or more embodiments of the disclosure, in instance 17 according to the method of any one of the instances 2-16, the preset association comprises at least one of the following associations: the user is at least one of the creator or the administrator of the group session, the user is at least one user designated by the current user, or the user is a target group member designated by at least one of the creator and the administrator of the group session.

According to one or more embodiments of the disclosure, instance 18 provides an apparatus for displaying a session message. The apparatus comprises:
a session message determination module configured to determine a target session message of a target message type in a group session interface, where the target message type indicates a message type of message content containing media content, and the media content comprises at least one of a picture or a video;
a target display mode determination module configured to determine a media type corresponding to the media content, and determine a target display mode for the target session message according to the media type, where the media type is determined based on at least one of a poster of the media content or a sender of the target session message; and
a session message displaying module configured to display the target session message in the target display mode.

According to one or more embodiments of the disclosure, instance 19 according to the apparatus of the instance 18 comprises: a module configured to implement the method according to any one of the instances 2-17.

According to one or more embodiments of the disclosure, instance 20 provides an electronic device. The electronic device comprises:
at least one processor; and
a storage apparatus configured to store at least one program.

When the at least one program is executed by the at least one processor, the at least one processor is caused to implement the method for displaying a session message according to the embodiment of the disclosure.

According to one or more embodiments of the disclosure, instance 21 provides a storage medium including a computer-executable instruction. The computer-executable instruction implements the method for displaying a session message according to the embodiment of the disclosure when being executed by a computer processor.

## Claims

1. A method for displaying a session message, comprising:
determining, in a group session interface, a target session message of a target message type, wherein the target message type indicates a message type of message content containing media content, and the media content comprises at least one of a picture or a video;
determining a media type corresponding to the media content, and determining a target display mode for the target session message according to the media type, wherein the media type is determined based on at least one of a poster of the media content or a sender of the target session message; and
displaying the target session message in the target display mode.

2. The method according to claim 1, wherein determining the media type corresponding to the media content comprises:
determining a target type corresponding to at least one of the poster of the media content or the sender of the target session message; and
determining the media type corresponding to the media content based on the target type, and
wherein the target type is determined based on whether a user has a preset association with a target user, and the target user comprises at least one of the following: a creator of a group session, an administrator of the group session, or at least one user designated by a current user.

3. The method according to claim 2, wherein determining the media type corresponding to the media content, and determining the target display mode for the target session message according to the media type comprises at least one of the following:
determining, in a case where the poster of the media content and the sender of the target session message have no preset association with the target user of the group session, that the corresponding target type is a first preset type; and determining that the target display mode is a first preset display mode according to a media type corresponding to the first preset type; or
determining, in a case where the poster of the media content or the sender of the target session message has a preset association with the target user of the group session, that the corresponding target type is a second preset type; and determining that the target display mode is a second preset display mode according to a media type corresponding to the second preset type, and
wherein the first preset display mode is different from the second preset display mode.

4. The method according to claim 3, wherein the first preset display mode is different from the second preset display mode in at least one of a display size, a display form, a display of a character, or an amount of displayed information.

5. The method according to claim 4, wherein at least one of the following conditions is satisfied: a display size corresponding to the first preset display mode is smaller than that corresponding to the second preset display mode; or an amount of displayed information of the first preset display mode is smaller than that of the second preset display mode.

6. The method according to claim 4, wherein a display form corresponding to the first preset display mode comprises displaying at least one of a thumbnail or a character associated with the media content, and a display form corresponding to the second preset display mode comprises displaying an original image associated with the media content, and wherein a size of the thumbnail is smaller than that of the original image.

7. The method according to claim 1, further comprising, prior to determining in the group session interface the target session message of the target message type, determining that a preset display function is in an enabled state, wherein the preset display function is set as adopting, for a current user, respective display modes for the session message of the target message type based on different media types of the contained media content.

8. The method according to claim 7, further comprising, prior to determining that the preset display function is in the enabled state,
enabling the preset display function in response to an enabling operation of the current user for the preset display function.

9. The method according to claim 8, wherein enabling the preset display function in response to the enabling operation of the current user for the preset display function comprises:
displaying a preset enabling control in an associated area of at least one session message of the target message type in the group session interface; and
enabling the preset display function in response to a triggering operation of the current user for the preset enabling control.

10. The method according to claim 7, wherein at least one of the enabled state or a disabled state of the preset display function is set by at least one of a creator or an administrator of a group session.

11. The method according to claim 3, further comprising, after displaying the target session message in the first preset display mode,
executing, in response to a target interaction request for the target session message, processing corresponding to the target interaction request, the target interaction request being triggered by the current user in a first preset triggering mode, wherein the first preset triggering mode is different from a second preset triggering mode, and the second preset triggering mode is a mode of triggering a target interaction request for a session message displayed in the second preset display mode.

12. The method according to claim 11, wherein the second preset triggering mode is different from the first preset triggering mode in types of gesture operations for triggering the target interaction request.

13. The method according to claim 3, further comprising, after displaying the target session message in the first preset display mode,
obtaining, in response to a citation operation of the current user for the target session message, reply content input by the current user; and
sending a citation message according to the reply content, and displaying the citation message based on a third preset display mode, wherein the third preset display mode is different from a fourth preset display mode, and the fourth preset display mode is a display mode for a citation message of the target session message displayed in the second preset display mode.

14. The method according to claim 3, further comprising:
determining, in a case where the target session message does not satisfy a preset filtering condition, that the media type corresponding to the media content corresponds to the first preset display mode, and displaying the target session message in the first preset display mode.

15. The method according to claim 14, wherein the preset filtering condition comprises at least one of the following conditions:
at least one of the creator or the administrator of the group session has conducted a first preset interaction operation on the target session message;
a cumulative number of group members who has viewed details of the target session message satisfies a first preset number requirement; or
a cumulative number of group members who has conducted a second preset interaction operation on the target session message satisfies a second preset number requirement.

16. The method according to claim 3, further comprising:
displaying, in response to a first search request of the current user for the session message of the target message type, a first search result and a second search result separately, wherein the first search result comprises the session message of the target message type that is sent by a group member of the first preset type and matched with the first search request, and the second search result comprises the session message of the target message type that is sent by a group member of the second preset type and matched with the first search request; or
displaying, in response to a second search request of the current user for the session message of the target message type sent by a group member of a target preset type, a target search result, wherein the target search result comprises the session message of the target message type that is sent by the group member of the target preset type and matched with the second search request.

17. The method according to any one of claims 2 to 16, wherein the preset association comprises at least one of the following associations: the user is at least one of the creator or the administrator of the group session, the user is the at least one user designated by the current user, or the user is a target group member designated by at least one of the creator or the administrator of the group session.

18. An apparatus for displaying a session message, comprising:
a session message determination module (701) configured to determine, in a group session interface, a target session message of a target message type, wherein the target message type indicates a message type of message content containing media content, and the media content comprises at least one of a picture or a video;
a target display mode determination module (702) configured to determine a media type corresponding to the media content, and determine a target display mode for the target session message according to the media type, wherein the media type is determined based on at least one of a poster of the media content or a sender of the target session message; and
a session message displaying module (703) configured to display the target session message in the target display mode.

19. The apparatus according to claim 18, comprising: a module configured to implement the method according to any one of claims 2 to 17.

20. An electronic device, comprising:
at least one processor; and
a storage apparatus configured to store at least one program, wherein the at least one program, when executed by the at least one processor, causes the at least one processor to implement the method for displaying a session message according to any one of claims 1 to 17.

21. A readable storage medium, comprising a computer program, wherein the computer program, when executed by a computer processor, implements the method for displaying a session message according to any one of claims 1 to 17.
